# EUROPEAN PATENT APPLICATION

(11) **EP 1 160 683 A2**
(43) Date of publication of application: **05.12.2001**
(21) Application number: 00203095.5
(22) Date of filing: 07.09.2000
(51) Int. Cl.: G06F 17/30

(54) **A system and method for categorising and retrieving documents on a network**

(30) Priority: 24.05.2000 IE 000407
(71) Applicant: Nua Limited, Co. Dublin (IE)
(72) Inventor: Lachtnain, Antoin O., Dublin 2 (IE); Holmes, Thomas, Dublin 2 (IE); McGovern, Gerry, Brackenstown, Swords, Co. Dublin (IE)
(74) Representative: Gates, Marie Christina Esther

(57) **Abstract**

Indexing and retrieving documents stored on a network, can be extremely difficult. To alleviate these difficulties the present invention provides a computer implemented method and system of categorsing documents on a network, by storing documents classifications in a document classification datastore for use with a classification system having one or more categories, each category having a plurality of classifications which are linked in a hierarchical structure (140,142,144,146), including the steps of obtaining the classifications for a document for a first category; determining a binary identifier for the document for each of the obtained classifications in the first category, combining the determined binary identifiers to produce a combined binary identifier, and storing the combined binary identifier in a datastore in association with the document. The invention further provides for a computer implemented method and system for searching documents stored in a datastore which have been classified using a classification structure comprised of a plurality of levels, with each level having relations with adjacent levels, such that each classification in the classification in the classification may have ancestor classifications and/or descendent classifications, including the steps of obtaining (124) a search criteria from a user including at least one classification to be searched, searching (130) for all documents in the datastore which have a classification matching either the classifications provided by the user in the search criteria, or a classification which is an ancestor or descendent of the classification provided by the user.

## Description

### Field of the Invention

This invention relates to methods and systems of publishing and classifying documents on a network and to methods and systems for retrieving these documents in response to a search request.

### Background to the Invention

The Internet and more specifically the World Wide Web have provided a medium enabling the rapid exchange of large amounts of information. This medium makes publishing and retrieving information faster than traditional publishing methods.

These advantages have however caused problems, one such example is the problem of information overload.

Information overload occurs when there is so much information on a web-site that a user is unable to find the specific information they are looking for. The problem is aggravated by incorrect information, grammatical errors, or out-of-date information.

There are a number of mechanisms available to deal with information overload. One is a full-text search engine, which allows the user to search for a given string within a corpus of pre-indexed information.

However, this method achieves only limited success. There are problems of scaleability. As the amount of information grows, the resources required to continuously build indices grows exponentially. This may result in the information being only partially indexed. Most full-text search systems will ignore relevant documents which happen not to contain the keywords searched for. A number of solutions have been proposed to this, e.g. WO9214214 describes a method of searching a collection of words based upon an input word, which first generates a related set of words which are lexically related to the input word and then searches the collection of words to detect the occurrence of the input word or any of the related words.

A problem with full-text search systems is that they are liable to return results that are not relevant, because they happen to contain the keywords searched for. The full-text search engine does nothing to deal with the existence of poor quality information on a web-site. It indexes all content blindly. In addition, depending on the choice of search words, the search may return a large number of documents.

A number of context based search engines have been developed which reduce this problem somewhat. For example, WO9749048 which describes a search engine for retrieving documents pertinent to a query indexes documents in accordance with hyperlinks pointing to those documents. The indexer traverses the hypertext database and finds hypertext information including the address of the document the hyperlinks point to and the anchor text of each hyperlink. The information is stored in an inverted index file, which may also be used to calculate document link vectors for each hyperlink pointing to a particular document. When a query is entered, the search engine finds all document vectors for documents having the query terms in their anchor text. A query vector is also calculated, and the dot product of the query vector and each document link vector is calculated. The dot products relating to a particular document are summed to determine the relevance ranking for each document.

US5864846 provides a method of combining search result documents, as provided by separate search engines in response to a query, into one single integrated list so as to produce a single document with a ranked list of pages, by forming a set of selected queries, the queries including respective terms, for which selected queries relevance data from past data is known, herein referred to as training queries, in a vector space comprising all training queries, the relevance data comprising judgements by a user as to whether a page is appropriate for a query which retrieved it. Further steps in the method are identifying a set of k most similar training queries to current query q, computing an average relevant document distribution of the k queries within the training queries' search results for each of the search engines, using the computed relevant document distributions, finding an optimal number of pages to select from the result set of each search engine when N total pages are to be retrieved, and creating a final retrieved set by forming the union of the top lambda s pages from each search engine.

US5933822 describes a method for retrieving information using natural language processing to process results retrieved by, for example, an information retrieval engine such as a conventional statistical-based search engine, in order to improve overall precision. Specifically, such a search ultimately yields a set of retrieved documents. Each such document is then subjected to natural language processing to produce a set of logical forms. Each such logical form encodes, in a word-relation-word manner, semantic relationships, particularly argument and adjunct structure, between words in a phrase. A user-supplied query is analysed in the same manner to yield a set of corresponding logical forms therefor. Documents are ranked as a pre-defined function of the logical forms from the documents and the query. Specifically, the set of logical forms for the query is then compared against a set of logical forms for each of the retrieved documents in order to ascertain a match between any such logical forms in both sets. Each document that has at least one matching logical forms is heuristically scored, with each different relation for a matching logical forms being assigned a different corresponding pre-defined weight. The score of each such document is, e.g., a pre-defined function of the weights of its uniquely matching logical forms. Finally, the retained documents are ranked in order of descending score and then presented to a user in that order.

US5983221 describes a method of searching which provides each document with an abstract written in a highly constrained artificial grammar. The artificial grammar is capable of expressing the thoughts and information ordinarily conveyed in a natural grammar, but in a structured format that restricts the number of possible alternative meanings. Accordingly, while the grammar is clear in the sense of being easily understood by native speakers of the vocabulary and complex in its ability to express sophisticated concepts, sentences are derived from an organised vocabulary according to fixed rules. A query, preferably formulated in accordance with these rules, is employed by a search engine in the usual fashion. Due to the highly constrained meaning of the search query, and the likelihood that relevant documents have similar or matching abstracts in their headers, keyword searches are likely to identify the most relevant documents.

US6006225 discloses a search engine which suggests related terms to the user to allow the user to refine a search. The related terms are generated using query term correlation data which reflects the frequencies with which specific terms have previously appeared within the same query. The correlation data is generated and stored in a look-up table using an off-line process which parses a query log file. The table is regenerated periodically from the most recent query submissions (e.g., the last two weeks of query submissions), and thus strongly reflects the current preferences of users. Each related term is presented to the user via a respective hyperlink which can be selected by the user to submit a modified query. In one embodiment, the related terms are added to and selected from the table so as to guarantee that the modified queries will not produce a NULL query result.

Another approach to dealing with information overload is to retrospectively. classify content and link to it. An example of such a system is provided by the YAHOO directory (www.yahoo.com) which consists of a categorisation of existing web-sites into hierarchically-linked headings. Sites are visited, assessed and categorised by YAHOO staff, and then added to the web-site. The problem with this approach is that it is difficult to keep abreast of all the new pages and sites being added to the World Wide Web, in order to assess and categorise all of them individually. This can result in very low coverage (only a small proportion of content can be categorised fully). While this process allows content to be excluded from being linked from the directory, it does not prevent the content from appearing altogether.

A further problem with existing search systems is the time it takes to conduct a search. Even where a classification system is used, the time it takes to conduct a search can be quite long.

A further problem with the methods of searching by classification is that in some cases information which may be classed in a main class may be of relevance to someone searching a sub-class and vice versa, but that typically this information would not be presented to the searcher.

A difficulty with existing search techniques used for searching stored documents which have been classified arises from the methods used to search databases. Typically when looking for documents stored in a particular class, search systems will perform a string comparison with the class field for each document. As the number of documents increase, the time required to perform a search increases. To search for documents in either of two classes, two separate searches are typically performed and the results AND'd together.

A further problem with searching using classification techniques is that documents which may be relevant to a particular classification are stored in a parent or child of that classification and can thus be missed in a search. The use of truncation in a search allows the user to readily search classifications and their children, but not the parent classification.

A further difficulty with the world wide web is that for most organisations the style, layout and content of a web-site is decided by the webmaster of the web-site. This can have the effect that the major point of contact between an organisation and its customers is provided by someone who may not be involved in the day to day operations of the firm and who may only have a basic knowledge of the commercial operations of the firm. As a result, inaccurate material may be placed on a web-site or important material may be placed in an obscure part of the web-site.

A solution to this problem is provided by NUA of Dublin, Ireland in the form of a software product entitled NuaPublish. It avoids the above described difficulties by ensuring that any content to be added to a web-site is categorised by the contributor, at the point of input, according to a pre-existing list of terms (which may be hierarchically linked). The same item may be categorised under more than one such heading. Because the content has been categorised in this way, it may be quickly and effectively searched, using the same list of terms or a list derived from it.

In addition, NuaPublish reduces the likelihood of content being of poor quality by providing for it to be screened by a publisher before it is published on the web-site. The publisher need not be the webmaster or someone with particular skills in the Internet as the primary function of the publisher is to approve or reject documents for publication.

With smaller web-sites, the NuaPublish product provides an excellent solution to the above described problems. However, as web-sites get larger, the workload of the publisher increases. Also, with larger web-sites, the publisher may not have a comprehensive knowledge of the various areas covered by the web-site. This can result in the same problem as described above, whereby inaccurate material may be placed on a web-site or important material may be ignored or not checked properly.

In addition as more and more work is conducted at remote locations, traditional work practises have to become more adaptable. Traditional structures of responsibility become difficult when people are not located in one location and the organisation of responsibility becomes difficult with high staff mobility.

Summaries are frequently provided for documents to facilitate the fast review of documents when searching. A summary written by one person may have a different focus to a summary written by another person, e.g. a summary of a product release document would be different if written by a marketing person or an engineer. Accordingly, the benefit of using summaries when searching can be limited.

### Object of the Invention

Accordingly, there is a need for improved searching, classification, approving, publishing and information retrieval methods and systems.

### Summary of the Invention

According to the invention, there is provided a computer implemented method of publishing documents on a network, comprising the steps of
receiving a submitted document from a user,
receiving a primary classification for the submitted document from the user,
determining a publisher associated with the primary classification, and
assigning the submitted document for review to the associated publisher.

In a preferred embodiment, the invention further provides for accepting a suitability indicator from the publisher for the submitted document, wherein a positive suitability indicator indicates the submitted document is suitable for publishing on the network, and
publishing the submitted document under the primary heading in response to a positive suitability indicator.

The step of publishing the document may combine any one of the following actions, changing the status of the document in one or more tables, moving or copying the document to a different location and/or altering the tags in a document. The step of publishing the document may include the provision of a summary of the document by the associated publisher.

In a further embodiment, the invention provides for receiving one or more secondary headings from the contributor,
selecting an associated publisher for each secondary heading, and
forwarding the submitted document for review to the publisher associated with a secondary heading. Preferably the step of selecting an associated publisher for a secondary heading and forwarding the submitted document for review is performed only after a positive suitability indicator has been received from the publisher associated with the primary heading.

The method further provides for accepting a suitability indicator from the publisher associated with the secondary heading for the submitted document, wherein a positive suitability indicator indicates the submitted document is suitable for association with the secondary heading,
and associating the document with the secondary heading in response to a positive suitability indicator.

In an optional embodiment of the invention, the step of publishing the document includes the step of adding a reference to the document in a database the reference including information identifying the primary heading. This embodiment further provides for altering a reference to a document in the database when associating the document with a secondary heading. The altered reference identifying that the document is associated with both the primary and secondary headings. The method may provide for the provision of a summary of the document by the publisher associated with the secondary heading.

According to a further embodiment of the invention, there is provided a system comprising a server for publishing documents on a network, comprising:
first receiving means for receiving a submitted document from a user,
second receiving means for receiving a primary classification for the submitted document from the user,
determining means for determining a publisher associated with the primary classification, and
assigning means for assigning the submitted document for review to the associated publisher.

In a preferred embodiment, the system further provides a first accepting means for accepting a suitability indicator from the publisher for the submitted document, wherein a positive suitability indicator indicates the submitted document is suitable for publishing on the network, and
publishing means for publishing the submitted document under the primary heading in response to a positive suitability indicator.

The publishing means may perform, in any combination, any one of the following actions, changing the status of the document in one or more tables, moving or copying the document to a different location and/or altering the tags in a document. The step of publishing the document may include the provision of a summary of the document by the associated publisher.

In a further embodiment, the invention provides for a third receiving means for receiving one or more secondary headings from the contributor,
a selection means for selecting an associated publisher for each secondary heading, and a forwarding means for forwarding the submitted document for review to the publisher associated with a secondary heading. Preferably, the selection means is only activated after a positive suitability indicator has been received from the publisher associated with the primary heading.

The system may further provides a second accepting means for accepting a suitability indicator from publishers associated with secondary headings for the submitted document, wherein a positive suitability indicator for a secondary heading indicates the submitted document is suitable for association with the secondary heading, and association means for associating the document with the secondary heading in response to a positive suitability indicator for that heading.

The publishing means may publish the document by adding a reference to the document in a database the reference including information identifying the primary heading. This embodiment further provides for altering a reference to a document in the database when associating the document with a secondary heading. The altered reference identifying that the document is associated with both the primary and secondary headings. The association means may provide for the provision of a summary of the document by the publisher associated with the secondary heading.

A method of storing documents classifications in a document classification datastore for use with a classification system having one or more categories, each category having a plurality of classifications which are linked in a hierarchical structure, comprising the steps of:
obtaining the classifications for a document for a first category;
determining a binary identifier for the document for each of the obtained classifications in the first category;
combining the determined binary identifiers to produce a combined binary identifier; and
storing the combined binary identifier in a datastore in association with the document.

The step of obtaining the document classifications for a document may include extracting information from a datastore containing this information, accepting input from a user and/or extracting the information directly from the document.

Preferably, the binary identifier for each classification is a binary number which is a power of two.

The step of determining a binary identifier for each classification for a document is preferably performed by retrieving a binary identifier value, from a database containing a list of classifications and corresponding binary numbers, for each of the obtained classifications. Preferably, each classification has a unique corresponding binary identifier. Preferably, the corresponding binary numbers each have only a single bit set. I.e. each classification is identified by a distinct bit. The step of combining the determined binary identifiers is preferably performed using an bitwise binary OR operation. Alternatively, the step of combining the determined binary identifiers may be performed by setting individual bits, as defined by the retrieved binary numbers.

The document classification datastore is preferably a document classification table in a database having a first field for identifying documents and
a second field for storing the combined binary identifiers.

Optionally, if a classification system has more than one category of classification, then a third field may be provided in the document classification table in the database, the third field identifying the category type.

In a preferred embodiment, the step of obtaining the classifications for a document for a first category includes the further step of determining ancestor and/or descendent classifications for each particular classification.

Alternatively, the reference to each classification is made by setting the status of a bit in a classification field in the database for a document. Each classification being identified by a distinct bit.

According to a further embodiment, a computer implemented method is provided for searching documents having classification information stored as binary identifiers, with each classification in a category, being identified by a unique binary identifier, comprising the steps of accepting one or more classifications submitted by a user to be searched,
determining a binary search identifier from the classifications submitted by a user, comparing the classification information of documents to be searched with the search identifier,
and transmitting a list of documents having matching classification information to the search identifier in the database to the user.

Preferably, the step of determining a binary search identifier from the classifications submitted by a user, comprises the steps of obtaining a binary identifier for each classification submitted from a database of classifications containing classifications and their associated binary identifiers, performing a bitwise OR operation on all of the obtained binary identifiers to produce the search identifier.

Preferably, with the step of comparing the classification information of documents to be searched with the search identifier is performed using a bitwise OR operation, with a non-zero result indicating a match.

In another embodiment, a computer implemented method of searching documents stored in a datastore which have been classified using a classification structure comprised of a plurality of levels, with each level having relations with adjacent levels, such that each classification in the classification in the classification may have ancestor classifications and/or descendent classifications, comprising the steps of:
obtaining a search criteria from a user including at least one classification to be searched,
searching for all documents in the datastore which have a classification matching either the classifications provided by the user in the search criteria, or a classification which is a descendent of the classification provided by the user. Optionally, the step of searching for all documents in the datastore may include the step of searching for all documents having classifications which are ancestors of the classification provided by the user in the search criteria.

In one embodiment, the step of searching for all documents in the datastore which have a classification matching either the classification provided by the user, or a classification which is an ancestor or descendent of the classification provided by the user, is performed by comparing document fields in the datastore, each document field being associated with an individual document with a search field identifying the search request.

Preferably, the document fields and search fields are bit fields with each classification being represented by a unique bit in a field. The step of comparing the document fields and the search field may be performed using a bit-wise AND operation. A non-zero result identifying a match between a document field and search field.

In one embodiment, a single document field is used to identify the classifications of the document, the ancestor classifications and the descendent classifications of the document classifications, each of the classifications being identified by a bit in the bit field. Preferably, the document field is created when the document is published in the datastore, or if a batch process is used shortly afterwards. In this embodiment, only the classifications provided by the user in the search criteria are identified by bits in the bit search field.

In an altemative embodiment, the search field is used to identify the classifications provided by the user in the search criteria of the document, the ancestor classifications and the descendent classifications of the classifications provided by the user in the search criteria of the document, each of the classifications being identified by a bit in the search field. In this embodiment, only the document classifications are identified by bits in the document bit field.

The method may comprise the further step of determining the ancestor and/or descendent classifications for a particular classification.

A system for storing documents classifications in a document classification datastore for use with a classification system having one or more categories, each category having a plurality of classifications which are linked in a hierarchical structure, comprising:
a first obtaining means for obtaining the classifications for a document for a first category;
a first determination means for determining a binary identifier for the document for each of the obtained classifications in the first category;
a first combining means for combining the determined binary identifiers to produce a combined binary identifier; and
a storing means for storing the combined binary identifier in a datastore in association with the document.

The first obtaining means may include means for performing any one or more of the following actions: extracting information from a datastore containing this information, accepting input from a user and extracting the information directly from the document.

Preferably, the binary identifier for each classification is a binary number which is a power of two.

The first determining means preferably comprises a retrieval means for retrieving a binary identifier value, from a database containing a list of classifications and corresponding binary numbers, for each of the obtained classifications. Preferably, each classification has a unique corresponding binary identifier. Preferably, the corresponding binary numbers each have only a single bit set. i.e. each classification is identified by a distinct bit. The combining of the determined binary identifiers is preferably performed using an bitwise binary OR operation. Alternatively, the first determining means may comprise a setting means for setting individual bits, as defined by the retrieved binary numbers.

The document classification datastore is preferably a document classification table in a database having a first field for identifying documents and
a second field for storing the combined binary identifiers.

Optionally, if a classification system has more than one category of classification, then a third field may be provided in the document classification table in the database, the third field identifying the category type.

In a preferred embodiment, the first obtaining means includes a relational determination means for determining descendent, and optionally ancestor, classifications for each particular classification.

According to a further embodiment, a system is provided for searching documents having classification information stored as binary identifiers, with each classification in a category, being identified by a unique binary identifier, comprising
a first acceptance means for accepting one or more classifications submitted by a user to be searched,
a first determination means for determining a binary search identifier from the classifications submitted by a user,
a first comparison means for comparing the classification information of documents to be searched with the search identifier, and
a first transmitting means for transmitting a list of documents having matching classification information to the search identifier in the database to the user.

Preferably, the first determination means, comprises an obtaining means for obtaining a binary identifier for each classification submitted from a database of classifications containing classifications and their associated binary identifiers, performing a bitwise OR operation on all of the obtained binary identifiers to produce the search identifier.

Preferably, the first comparison means uses a bitwise OR operation, with a non-zero result indicating a match.

In another embodiment, a system for searching documents stored in a datastore which have been classified using a classification structure comprised of a plurality of levels, with each level having relations with adjacent levels, such that each classification in the classification in the classification may have ancestor classifications and/or descendent classifications, is provided comprising:
a first obtaining means for obtaining a search criteria from a user including at least one classification to be searched,
a searching means for searching for all documents in the datastore which have a classification matching either the classifications provided by the user in the search criteria, or a classification which is a descendent of the classification provided by the user. Optionally the searching means may also search for all documents in the datastore which have a classification which is an ancestor descendent of the classification provided by the user.

In one embodiment, the searching means comprises a comparing means for comparing document fields in the datastore, each document field being associated with an individual document with a search field identifying the search request.

Preferably, the document fields and search fields are bit fields with each classification being represented by a unique bit in a field. The comparison means may be implemented using a bit-wise AND operator. A non-zero output from the operator identifying a match between a document field and search field.

In one embodiment, a single document field is used to identify the classifications of the document, the ancestor classifications and/or the descendent classifications of the document classifications, each of the classifications being identified by a bit in the bit field. Preferably, the document field is created when the document is published in the datastore, or using a batch process shortly afterwards. In this embodiment, only the classifications provided by the user in the search criteria are identified by bits in the bit search field.

In an alternative embodiment, the search field is used to identify the classifications provided by the user in the search criteria of the document, the ancestor classifications and/or the descendent classifications of the classifications provided by the user in the search criteria of the document, each of the classifications being identified by a bit in the search field. In this embodiment, only the document classifications are identified by bits in the document bit field.

The system may comprise a relational determination means for determining the ancestor and descendent classifications for a particular classification.

A database structure for storing document classifications comprising a table having a first field and a second field, wherein the first field contains a document identifier which identifies individual documents, and the second field contains a binary identifier which identifies one or more classifications and in which each classification is represented by a unique bit in the identifier.

The database structure optionally contains a third field which identifies a classification category.

The invention also provides for a computer program product comprising a computer usable medium having computer readable code embodied therein for implementing the methods of the invention described herein.

### Brief Description of the Drawings

The invention will now be more particularly described with regard to the accompanying drawings, in which:
Figure 1 is a block diagram of a network arrangement suitable for use with the present invention,
Figure 2 is a diagram of a set of tables in a SQL database used in the implementation of an embodiment of the present invention,
Figure 3 is a screen shot of a graphical user interface used in an embodiment of the present invention,
Figure 4 is a diagram of a further set of tables in a SQL database used in the implementation of an embodiment of the present invention,
Figure 5 is a flowchart showing the steps according to one embodiment of the present invention,

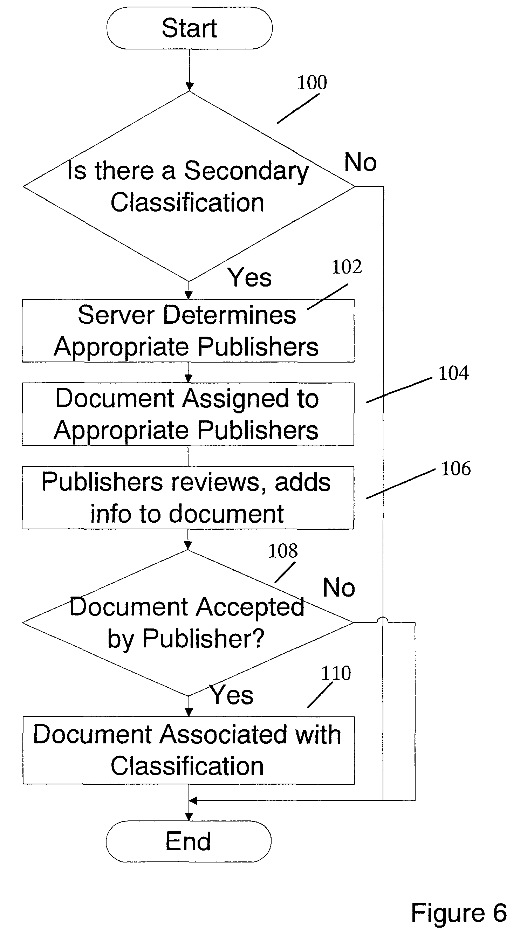

Figure 6 is a detailed view of a section of the flowchart shown in Figure 5,
Figure 7 is a flowchart of a method of searching according to the invention,
Figure 8 is a hierarchical classification structure,
Figure 9 is an exemplary bit field structure according to the invention for storing classifications of documents classes in accordance with the structure of Figure 8, and
Figure 10 is a detailed view of an embodiment for performing one of the steps of the method shown in Figure 7.

### Detailed Description of the Drawings

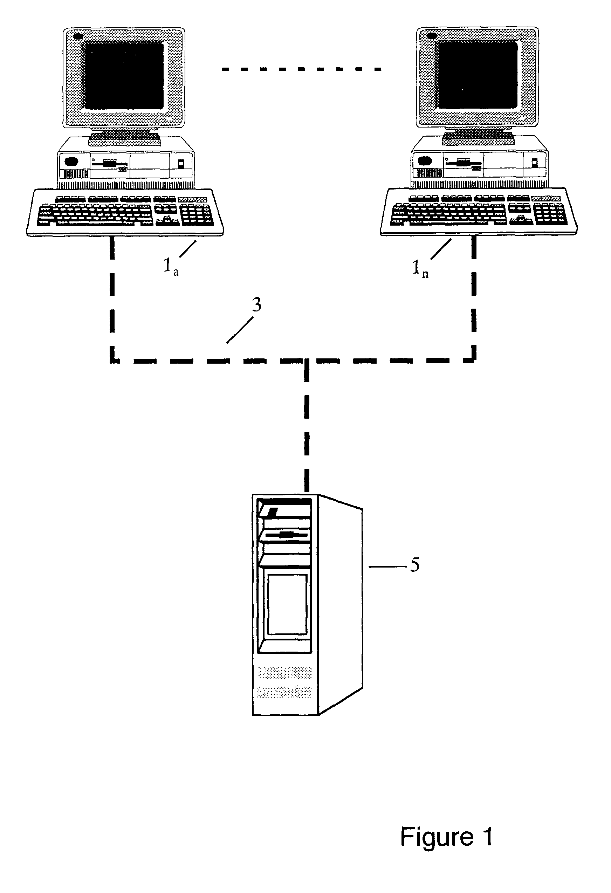

The present invention is intended for use in a network environment, an example of which is shown in figure 1, comprising at least one server 5 which is connectable via a network 3 to a plurality of computers 1ₐ-1ₙ. The network may be a local area network (LAN), wide area network (WAN), or the Internet.

The server 5 provides access to files and services to connected client computers 1ₐ-1ₙ who are permitted access. The server will typically be provided with protection to prevent unauthorised access. In larger implementations the server 5 may be implemented using a plurality of different server machines.

The present invention will now be described with reference to an exemplary embodiment. The embodiment is implemented using an SQL database in a client server environment. The software resides centrally on the server 5 and users may retrieve and/or input information to the server using a standard web browser, e.g. NETSCAPE NAVIGATOR; on a computer 1ₐ-1ₙ connected to the network 3. The users access the server 5 using a HTML interface which may use a combination of JAVA, JAVASCRIPT and HTML Forms. Techniques for implementing interfaces of this kind are well known in the art. As the user clicks on a section of a HTML page presented to them, the client software (browser) responds by returning commands and/or data to the server. The server 5 processes these commands and may update the database, add new data to the database, and/or retrieve information in a form suitable for viewing on the client machine. Techniques and methods for implementing browser interfaces are well known in the art.

In operation, there are three different categories of people who may access the server 5; contributors, publishers and readers (searchers). Contributors are users who create content (documents) for publication on the server 5. Publishers are users who approve or reject content for publication on the server 5. Readers are the intended end users of the system who read (download) content from the server that they are interested in.

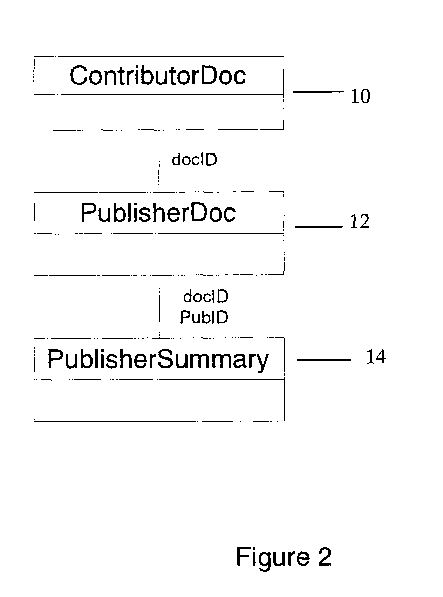

A sample database structure for dealing with the documents submitted by a contributor is shown in Figure 2. The database structure is composed of three main tables; the ContributorDoc table 10, the PublisherDoc table 12 and the PublisherSummary table 14.

The ContributorDoc table 10 contains a list of all documents that have been created, with each document being identified by a unique document identification (DocID). The ContributorDoc table 10 also contains fields which identify who the contributor is and the status of the document. The PublisherDoc table 12 contains a list of all documents that have been submitted for review, each entry in the table is uniquely identified by a DocID and a publisher identifier (PubID). Accordingly, there may be several entries in the PublisherDoc table 12 for the one document, each having a different publisher. The PublisherSummary table 14 allows multiple summaries to be stored for a single document, each summary corresponds to a different publisher.

The software on the server 5 comprises three main tools: a contributor tool, a publisher tool and a Web-site builder. The software tools generate appropriate HTML files (or other suitable formats) which are sent to the client machines for viewing by the individual users. Data for the server is mainly transferred using the tools from the client machines to the server. The software tools may be implemented using a variety of different methods and structures, for example the system may be implemented where the bulk of the processing is performed either on the client machines 1ₐ-1ₙ or on the server 5 or a combination of both.

The contributor tool primarily allows contributors to submit documents for review. The publisher tool allows a publisher to review a document and determine whether it is suitable for publication and the Web-site builder presents the web pages to users accessing the site and determines which documents they are presented with.

The contributor tool process is started when a user (contributor) connects to the server 5, the user enters a user name and, if required password. The user is then presented with a Hyper Text Mark-Up Language (HTML) page, referred to as a console, which provides them access to the software tools. Depending on their access privileges, users may have access as more than one category of user, e.g. a user may be a contributor and a publisher and accordingly have access to the contributor tool and the publisher tool.

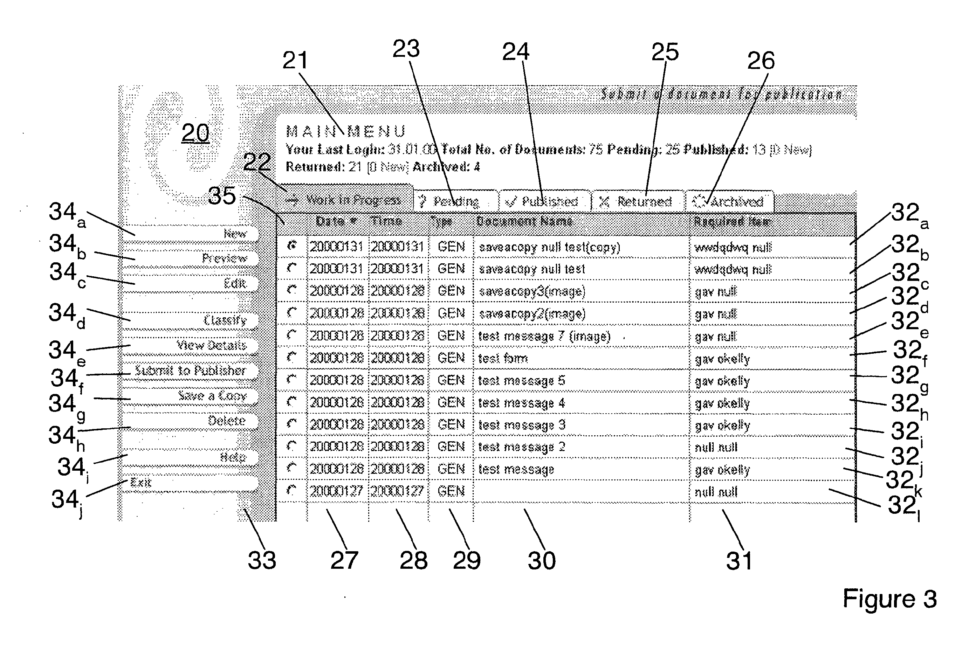

In use, a contributor who wishes to submit a document for publication on the web-site, selects (accesses) the contributor tool. The contributor tool enables a contributor to create and submit (upload) a piece of content (called a document) to the server. The contributor tool comprises a suitable Graphical User Interface (GUI) 20, generated by a browser from a HTML file sent from the server. Background code (e.g. forms, JAVA and or JAVASCRIPT) enables the contributor to interact with the server 5. An example of a GUI 20 is shown in Figure 3 comprising;
- A status box 21 displaying statistics about the user's documents, e.g. the number of documents submitted, the number of documents published, etc.
- Five folders 35 (described below). Only one folder 35 is displayed at a time and the user switches between folders by clicking on tabs 22, 23, 24, 25, 26, each tab corresponding to a folder 35. Each folder 35 typically contains a plurality of documents 32ₐ₋₁.

In the exemplary embodiment shown, there are five standard columns 27, 28, 29, 30, 31 in each folder; Date, Time, Type, Document Name, Required Item. The date column 27 contains the date that any particular document was last edited by the contributor, the items in the columns may be sorted in ascending or descending date order. The Time column 28 contains the time that any particular document was last edited by the contributor. The document type column 29 indicates the type of each document in a folder 35. For example, "GEN" indicates a general article. The Document Name column 30 identifies titles given to documents by the contributor. The Required Item column 31 alerts contributors to any documents that require items, e.g. images, before they can be submitted to document publishers for approval. A contributor can view all the documents which they have submitted, check on their status, create and submit new documents.

The five folders are as follows: Work in Progress folder 35, Pending folder, Published folder, Returned folder and Archived folder. The Work in Progress folder 35 lists documents 32ₐ₋₁ which have not been submitted to a publisher. The Pending folder lists documents which have been submitted to a publisher but have not been published or returned. The Published folder lists documents which were approved by a publisher. These documents are available on the web-site. The Returned folder lists documents which were not approved by a publisher. These documents have been returned to the user. The Archived folder lists documents which were published on the web-site but have now passed their expiry date. The list of documents for any one folder is obtained by a simple SQL query which interrogates the ContributorDoc table 10 for all documents for a particular contributor having a status equivalent to that folder, these documents are then linked with other tables to obtain the required information, which is suitably formatted for presentation to the contributor in the HTML page 20.

To perform specific tasks, e.g. create or submit a new document, a contributor clicks on the buttons 34ₐ₋ⱼ in the column 38 on the left-hand side of the screen 20.

The contributor creates a document by clicking on the "New" button 34ₐ. The contributor may be presented with a number of sample templates for submitting different types of content. After choosing an appropriate document format (template), an 'Edit' screen is displayed. The 'Edit' screen allows the contributor to enter details such as title, author, and copyright information to be entered along with the text of the document. HTML tags may be inserted in the document to provide formatting. Optionally the contributor may include images and/or hyperlinks in the document. A summary and some keywords which can be searched may also be entered in the form. After filling out the form in full, and providing a name for the document the contributor saves the document by forwarding it to the server 5. This is performed by the contributor clicking on an appropriate button on the form. The contributor may also assigns an archive date indicating when the material contained in the document will no longer be of relevance. The information transferred to the server incorporates the text of the document and the other information entered by the contributor.

Alternatively, the contributor may simply upload a file to the server 5. The file which is uploaded to the server would contain the information generated by the contributor.

The contributor may edit documents contained within the Work in Progress folder or in the Returned folder. Documents in the Returned folder are documents which were rejected by a publisher. The contributor can edit and re-submit rejected documents if they so choose. To edit a document the contributor selects a document from the available list of documents in either the Work In Progress or Retumed Folders and then clicks an "Edit" button 34_{c}. The Editing feature allows a contributor to edit the details, content, summary and keywords originally specified for the document. The changes are saved by clicking on a "Save" button. Further functions may be provided, for example a contributor may check the status of a document (for instance, to see if it has been accepted for publication), or delete a documents from the Work in Progress folder or make a copy of a document.

A contributor must classify a document before they can submit it for publication. To Classify a document, the contributor clicks the "Classify" button 34_{d}. The user is then presented with a Classification screen. The Classification screen provides the user with one or more main categories from which the contributor may classify the document. Each category consists of a list of category names (classifications). The contributor selects a category name by highlighting it in the list. Optionally, their may be provided a set of sub-categories (also classifications) for a particular category name.

The sub-categories consist of a list of sub-category names which are a subset of any particular category. For example, for a geographical category, the category names may be "Europe", "Asia", "USA", "Australia", "Middle East" etc. The Category Name "Europe" might include the following sub-category names "Ireland", "UK", "France", etc. Further layers of classification may be provided, e.g. Subsub-categories. A contributor adds a classification by highlighting the class and using the add function, which automatically associates the document with the particular category name and if appropriate sub-category name. A similar feature allows a user to delete previously selected category names.

In order to submit a document the contributor must classify the document using at least one of the categories. The contributor may be required to classify the document using all or a portion of the available categories. The system may be designed to permit only one category name (Classification) for each category. In a preferred embodiment the contributor is permitted to select as many classifications (category names and sub-category names) as appropriate.

This ability to add or remove classifications may be implemented using a "Current Classification" list, to which category names and sub-category names may be added. The "Current Classification List" is automatically associated with its corresponding document. The user may remove a category from the "Current Classification" list by selecting it and clicking "Remove". For larger systems there may be several layers of classifications in each category.

When a user has created and categorised a document, they may submit it for publication. This step may be actuated in software using an appropriate button 34_{f} on the Main Menu 33 and/or on the Edit and Classification screens. The server may respond with an appropriate message to confirm that the document has been submitted.

If more than one category name is permitted to be selected from any one category, then the user may be required to identify one of the category names as the primary category name.

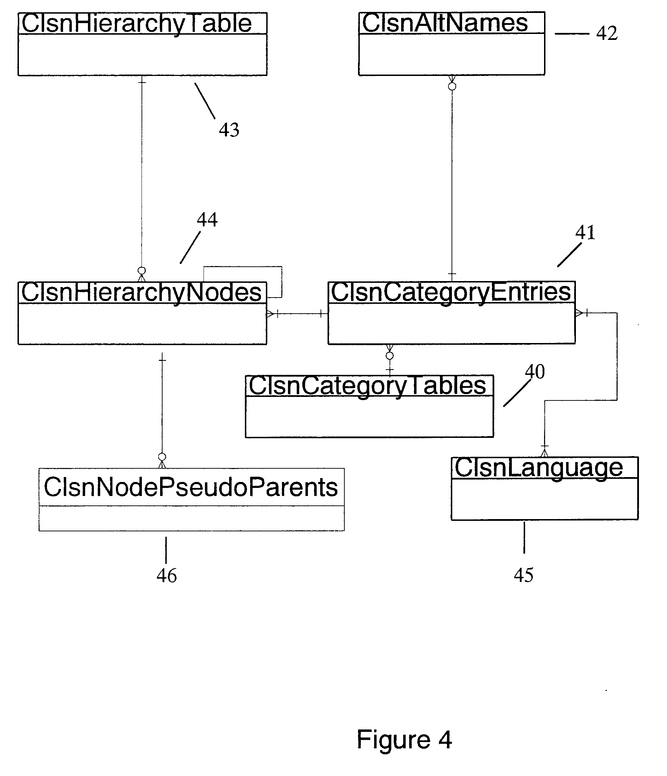

The classifications, presented to a user, are preferably obtained using appropriate queries from a set of tables on the SQL database on the server. The data obtained by the queries is suitably formatted before presentation to the user. A specific embodiment of a classification SQL table structure is shown in Figure 4. The table structure provided enable the storing, retrieving and updating of classifications in a simple and dynamic manner. The use a table structure provides greater flexibility than might be obtained using other techniques, e.g. hard coding in software. Listed here is a brief description of the service (function) that each table provides. The Tables on the database include the following; ClsnCategoryTable 40, ClsnCategoryEntries 41, ClsnHierarchyTable 43, ClsnHierarchyNodes 44, ClsnAltNames 42, ClsnLanguage 45 and ClsnNodePseudoParents 46.

The ClsnCategory table 40 stores the different categorisation types (categories) in the system - e.g., Location, Subject. The ClsnCategoryEntries table 41 is used to store the different classifications and indicates which category each belongs to.

In order to define the ancestry and descending structure of the classifications, i.e. which classifications are sub-classifications of another and vice versa, the database structure provides a set of tables to map out these inter-relationships (so as to define the tree structure of the database). Each split in a branch defines a node, the ClsnHierarchyTable 44 defines the structure and order of a particular classification. The ClsnHierarchyTable 44 table defines the name of the hierarchy and the ClsnCategoryTable 40 entry it applies to. The ClsnHierarchyNodes table 40 describes the nodes that make up all of the hierarchies. Each node stores the id of the ClsnCategoryEntry it points to, the hierarchy to which it belongs and the id of its parent node. The ClsnAltNames table 42 is used to store alternative names for classifications. This table maps alternative names to entries in the ClsnCategoryEntries 41 and ClsnCategoryTables tables 40. Some nodes may have more than one parent in the hierarchy. The ClsnNodePseudoParents table 46 records the alternative parents for such nodes.

This ClsnLanguage table 45 lists the different types of spoken languages that a category allows for. The ClsnCategoryTables 40 and ClsnCategoryEntries tables 41 store the name of the classifications in each of the different supported languages.

It will be appreciated by those skilled in the art, that different table structures may be used depending on the level of complexity and/or functionality required.

When a contributor requests to categorise a document, the server software extracts the different types of categories from the ClsnCategory Tables 40. The server also selects the category names (classifications) available for each of the categories from the ClsnCategoryEntries table 41. These are formatted and returned to the user in the form of a HTML document. If appropriate, several levels of classification may be shown to the user.

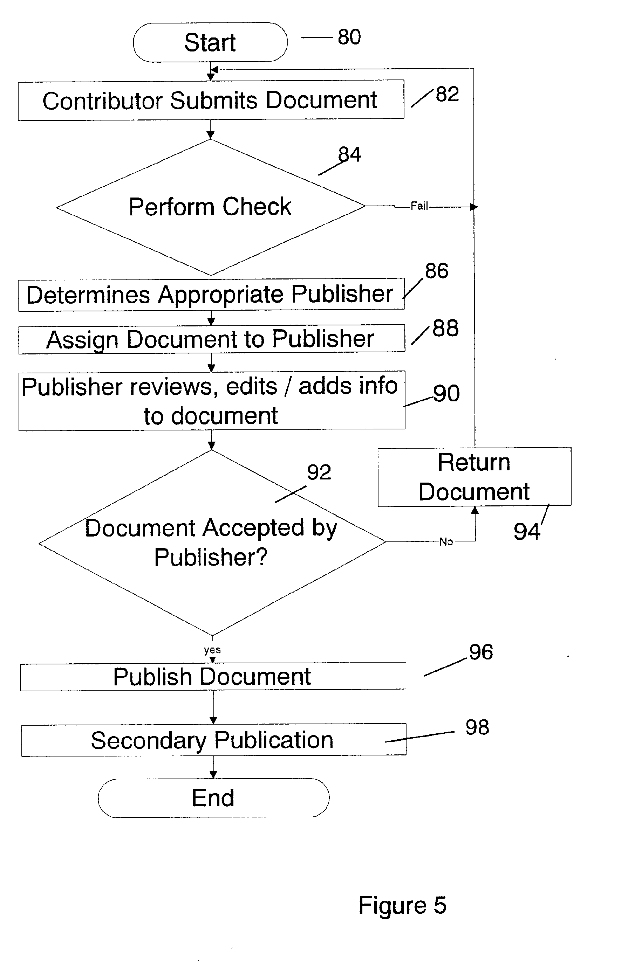

The process for reviewing and publishing a document on the server starts 80, as shown in Figure 5, with the server accepting 82 a document from a contributor, accompanied by one or more classifications. As explained above accepting a document is when an indication is received from the contributor that they want to submit a document for review. A contributor may save a document on the server without having to submit it for review.

The server software 84 performs a check to confirm that a classification and if required primary classification have been provided. Alternatively, this check could be performed on the client machine using appropriate code , e.g. JAVASCRIPT, embedded in the HTML page. An appropriate message may be presented to the contributor if required information has not been provided.

After the check has been completed, the server software alters the status of the document in the ContributorDoc table to indicate that the document has been submitted for review and is now pending.

The server then determines 86 what publisher is responsible for the primary classification. This determination may be made by reference to a table on the database, which contains a list of classifications and associated publishers. A publisher is a person or group that has responsibility for a certain section of the web-site. Each publisher can have a number of headings in the classification system within its domain, that is, under its control. In some cases, the domain of a publisher may be defined by combinations of headings. For example, where A, B, C, X, Y, Z are headings, a publisher who has domain over the combination AX has control only over documents categorised under both A and X. The publisher does not have control over documents categorised under only either A or X.

Where a document is submitted and then categorised under only one heading or combination of headings, it is submitted only to the publisher in whose domain that heading or combination of headings falls. If it is published, it is marked to become part of the web-site. Where the document belongs to more than one heading or combination of headings, it is submitted first to the primary publisher, chosen by the contributor. In very large web-sites, more than two publishers may be assigned to a single classification. A number of different methods may be used in this scenario to determine which publisher is appropriate, for example sub-classification may be used to differentiate publishers, i.e. an publisher may have responsibility for only certain sub-classifications. Alternatively, the server may determine the current workload of publishers and assign the document for review to the publisher with the lowest number of documents pending review assigned to them.

In another embodiment, a status could be assigned to individual publishers indicating whether they were available for reviewing documents or not.

When the server has selected a publisher, it assigns 88 the document to that publisher for review. In the present embodiment, assigning 88 of a document is performed by adding an entry to the PublisherDoc table 12, in the SQL database. The entry identifies the document, the publisher who has been assigned the document, and a status to indicate that the document is pending.

Publishers use a publisher tool to examine and evaluate documents. The Publisher tool allows documents (content) submitted by a contributor, to be sent back to a contributor for rework, or to be published to the site.

If the primary publisher reviews 90 a document and it rejects the document is returned 94 to the contributor without further processing. If the primary publisher decides 92 to accept a document, the document 96 is marked to become part of the web-site, but only for the categories for which the primary publisher has approved it.

When a publisher connects to the server, a the process similar to that described for a contributor, the publisher is initially presented with a Main Menu comprising a status box and a set of four folders, in a similar arrangement to the GUI presented to a contributor. The status box displays statistics about the publisher, e.g. the number of documents reviewed, the number of documents returned, etc.. The four folders (described below) each contain standard information concerning documents listed in a folder, e.g. Date and time a document was submitted, the document type, the document name and the name of the contributor.

A Publisher can view all the documents they have worked with, check on their status, and approve and publish (or reject and return) new documents.

The four folders are as follows: Pending, Published, Returned, and Archived. The Pending folder lists documents which have been assigned to the publisher but which have not yet been published or returned. The Published folder list documents which were approved by the publisher and are available on the web-site. The returned folder lists documents listed which were rejected by the user and were returned to the contributor. The Archived folder lists documents that were published on the web-site but have now passed their expiry date. The list of documents for any one folder is obtained by a simple SQL query which interrogates the PublisherDoc table for all documents for a particular publisher having a status equivalent to that folder, these documents are then linked with other tables to obtain the required information, which is suitably formatted for presentation to the contributor in a HTML page.

To perform (request) a specific task using the publisher tool, a publisher clicks on appropriate section (button) on the HTML page presented to them.

The task of reviewing a document commences with a publisher opening their documents Pending folder. The publisher selects a document in the folder and then clicks "Review Document" button. This causes the server to provide a Review Document screen for display on the publishers computer. The publisher can review the document and determine whether it is suitable for publishing on the web-site.

If a publisher decides that a document is suitable for publishing, the publisher clicks an appropriate button, e.g. "Publish Document" button, on the screen. This causes the browser software to forward a positive suitability indicator to the server. The server responds to the positive suitability indicator by changing the status of the document in the ContributorDoc table to published and in the PublisherDoc Table for that publisher to published. The document is classed according to the heading for which it was approved.

If a document is either unsuitable for publication or requires significant changes before it can be published, the system enables the publisher to return 94 it to the contributor who submitted it. The publisher may provide the contributor with a reason for why the document was rejected by either selects one from a pre-defined list of reasons for returning the document or by typing a reason into the text box. Clicking an appropriate button on the screen sends a negative suitability indicator to the server, which responds by changing the status of the document in the ContributorDoc table to returned and changing the status of the document in the PublisherDoc table to returned.

If a contributor views their documents, they will see that the returned document is now contained in their Returned folder.

The publisher tool allows a publisher to edit a document, e.g. where minor typographical changes are required. The publisher may also make changes to classifications but not to the primary classification. Other information, e.g. the archive on date, may also be edited or entered.

Once a primary publication has been completed, in the sense that the primary publisher has approved it, the next step performed is secondary publication 98, a detail of which is shown in Figure in which the server determines 100 whether there have been any secondary (non primary) classifications entered. If no secondary classifications have been entered then the process is complete.

If a secondary classification exists, then the server software determines 102 an appropriate publisher for each classification, and assigns 104 the documents to each appropriate publisher.
In the current embodiment, the server achieves this by adding an entry to the PublisherDoc table for each of the secondary publishers when the document is approved by the primary publisher.

Each secondary publisher can review 106 and add a summary and other information to the document. Each of the summaries are stored in the PublisherSummary table. If a document is accepted 108 by a Publisher, then the document is associated with the secondary classification 110. By association it is meant that the document details in the database (or document itself) are altered to include the secondary classification, i.e. the document is classed under the primary and secondary classification.

The document is presented to the secondary publisher in a similar way to that presented to the primary publisher. The secondary publisher is not allowed make changes to the document or to its classification. However, the secondary publisher may make changes to the document summary, in effect create a separate summary so that the document is placed within context and its relevance explained for the secondary publisher's section of the site. This separate summary is stored in the PublisherSummary table.

If a document is accepted by the secondary publisher, the status for the document in the PublisherDoc table for that publisher is changed to published. The PublisherSummary table is updated with the summary provided by the secondary publisher. In another embodiment, additional information could be provided which could be changed by the secondary publisher to place it in context on the site.

If the document is rejected, the contributor is informed, but the other classifications are not affected. As the document has been published by the primary publisher, the contributor is not permitted to simply amend it and re-submit it to the secondary publisher. Optionally, the contributor may amend the document and re-submit it to as a new document with the secondary publisher identified as the primary publisher.

The web-site that is published on the Network (e.g. Internet or Intranet), is built using the webbuilder tool using the documents which have been marked for publication. The webbuilder tool allows documents to be included in a HTML web-site using tools and techniques known in the art. Different versions of the site can be provided, each containing only documents which have certain associated information. For example, if the site is accessed by a user who is known to have information in a particular classification, then this information may be presented. E.g. a person from the marketing section of a company, may be presented with a list of marketing documents when they connect to their company's server.

A site may be built in a variety of ways on the basis of the classification. It may also be presented as a site which is built so that the navigation resembles the classification system. A site may also be presented so that it can be searched under any combination of classifications, so that only those documents that are categorised under categories relevant to the selected classifications are presented to the user.

The web builder may provide a search screen with the information presented to a user dependent on the search criteria they entered. For example, if a document is classified using more than one classification, then a user who conducts a search using a particular classification as a search key may be presented with information related to the document for that classification, e.g. a summary prepared by the publisher associated with a classification. Accordingly, different information concerning the same document may be presented to a user depending on the user or user's query.

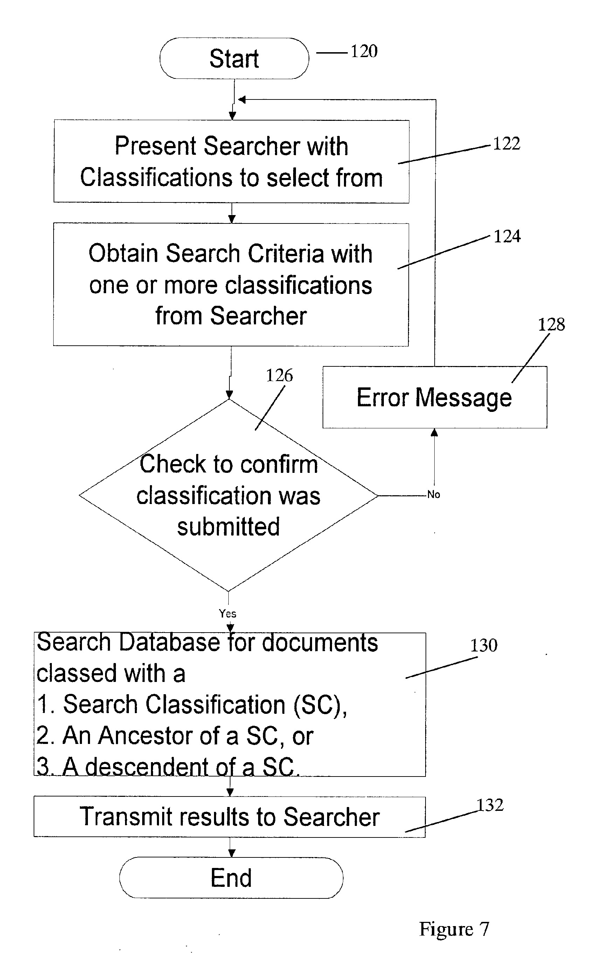

According to a further embodiment of the invention, a search method is provided to find relevant documents where a classification system is used, for example the hierarchically linked classification as defined by the classification table structure described above. A flowchart illustrating the method of performing a search according to this embodiment is shown in Figure 7, which commences 120 with a user selecting and submitting 124 a number of categorisations in which they are interested from a GUI which presents 122 them with one or more lists of available classifications of which they access when connecting to the server. The software obtains the list of classifications in a similar fashion to that described for the software enabling a contributor to classify a document when submitting it.

The server or client software may perform a suitable check 126 to ensure one or more classifications have been selected for a search. Any submitted searched which fail the check may be re-presented to the searcher with a suitable error message 128. The server then searches 130 the database for all (published) documents that are categorised in classifications which are ancestors (parent, grandparent, great grandparent, etc.) or descendants (child, grandchild, etc.) of the selected classifications. Ancestors and descendants are explained in greater detail below. It will be appreciated that this may be implemented in two distinct ways, 1. Where the software determines the and/or descendants of classifications to be searched and adds these to the search criteria, or alternatively 2. Where the ancestor and descendent classifications have been associated with the documents to be searched before the search.

Any documents found are then suitably transmitted to the user 132, e.g. as a list in a HTML page, each item in the list pointing to a document found.

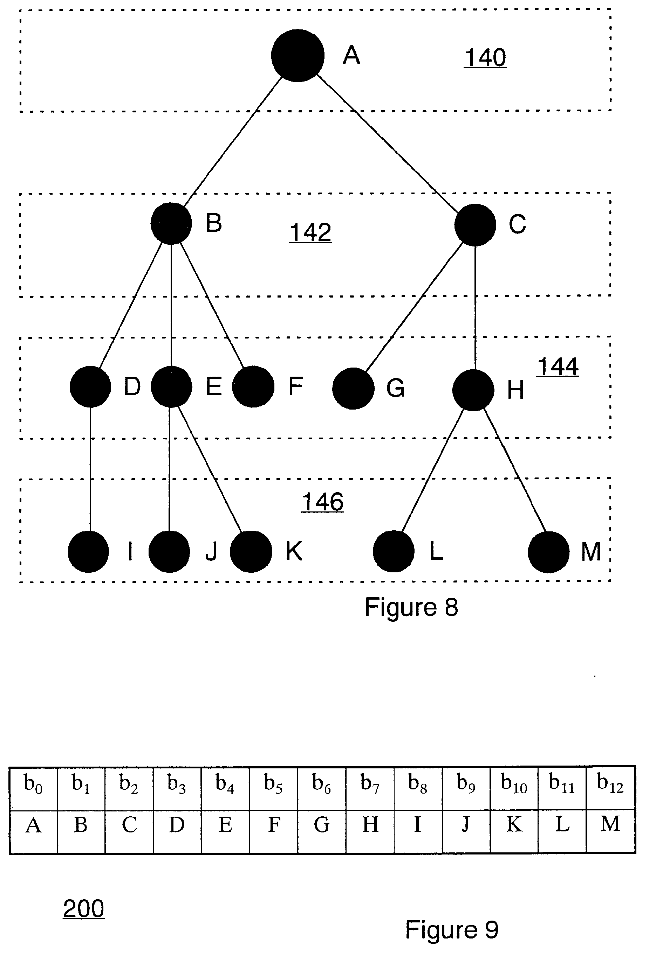

An example classification structure is shown in Figure 8, in which their is shown a first (main) classification level 140, a second (sub) classification level 142, a third classification level 144 and a fourth classification level 146. Normally the first level of classification 140 would contain several different classifications. Each classifications in a lower level (142, 144, 146) is a sub-classification of a classification in an upper level (140, 142, 144), e.g. F is a sub classification of B which in turn is a subclassification of A, whereas J and K would be considered children of F. The term descendent is used to identify any classification which is a child, grandchild, great-grandchild etc. of a particular classification. In the example shown in Figure 8, M is a descendent of H, C and A, whereas B is only a descendent of A. The term ancestor defines a reciprocal relationship to that of descendent, for example if C and G are descendants of A, then A is an ancestor of C and G.

In conducting a search using the new search method, the server would retrieve all documents classed in either the classification of interest, or the ancestor and descendent classifications of the classification of interest. For example, in the classification structure shown, if the user selected the classification H, then the server would retrieve all the documents classed under the classification H, the parent of H, i.e. C, the parent of the parent C, i.e. A, and the children of the classification H, i.e. L and M.

This method of searching improves the ability of a user to retrieve information in which they are interested. For example, if a geographical classification was used for a company's marketing database, then a person searching for information relating to a country would also obtain information classed under towns in that country, or under the regional area the country was located in. As a specific example, if a user was looking for documents concerned with the country "Belgium", all documents that are categorised under "Europe" or "Belgium" will be returned. Similarly, if a user chooses "Europe", all documents that are categorised under "Belgium" (as well as "France", "Ireland", "Latvia", etc.) will be returned. This ensures that the relevance of search results is maximised, and that relevant documents are not omitted from search results because of the specific categories specified by a contributor or by a person conducting a search.

Searches can of course be combined with other criteria, e.g. keywords, contributor, date, etc.. The use of archiving ensures that the user is only presented with relevant material which has not expired. If archiving was not used and the amount of content on a site was significant compared to the numbers of classifications, information overload could occur.

Implementing this searching method would be extremely demanding in terms of server resources using a normal classification method or system. Accordingly, a new classification method has been developed.

The new document classification method is based on using a bit field to store the classifications in which a document has been classed in a category. It will be appreciated by those skilled in the art that this technique of using bit fields may be used with standard methods of searching as well as the ancestral/descendent method described above. The technique may also be used to quickly search for documents which match the classification or the descendent classification. This latter technique would be usefull when constructing a page listing the various pages available in a classification or descendent of the classification. Each node (distinct classification) in the classification structure is assigned to a different bit in the bit field. For example, for the classification structure shown in Figure 8, a 13 bit field 200, as shown in figure 9, would be required. Each bit in the bit field is uniquely associated with a classification in the classification structure.

Using a geographical example, if we were categorising Ireland, and categorising it down by the 32 counties, and then again by locality, and there were on average 20 localities in each county, we would need 1 bit for Ireland, 32 bits for the counties, and 640 (20x32) bits for the localities, resulting in a requirement for a 673 bit field.

For each categorisation type, a field is created in a database which will hold at least as many bits as there are classifications (which correspond to nodes) in any on category. Each classification is identified by a unique bit in the field. The bit is set by assigning it a value. In the examples described below, a value of 1 has been used to identify when a bit is set. Equally well a value of zero could be used to identify set bits with a 1 indicating an un-set bit.

Ideally, the bit fields are initialised once when the classification structure is constructed or as additional classifications are added. A bit field length longer than initially required could be used to accommodate the addition of additional classifications at a later date. For simplicity, the bit lengths used should be a multiple of a standard bit length number format used by the database storing them, e.g. for SQL databases this would generally correspond to 32 bits for an integer (however, the 32nd bit is used to indicate the sign of a number and accordingly only 31 bits are available).

In constructing a bit field for a particular classification, the process selects the bit corresponding to the classification, e.g. for the classification E shown in Figure 8 having the bit assigned as shown in Figure 9, b₄ would be set to one, i.e. the bit field would be 0000100000000.

To classify a document in a number of different classifications, the unique bits corresponding to each classification would be set, e.g. for the classifications A, B, E and L shown in Figure 8 and Figure 9, b₀, b₁, b₄ and b₁₁ would be set to one, i.e. the document bit field for that category would be 1100100000010.

To determine whether a particular document is classed in a particular classification, the document bit field is bit-wise AND'd with a search bit field which identifies the classifications of interest. A non-zero result indicates a match.

For the search method described above or others which use a combination of ancestry and descendency of classifications combined fields may be constructed. These Combined bit fields which identify the classifications associated with a document or search criteria, the ancestor classifications of the associated classifications and/or descendent classifications of the associated classifications, may be obtained by determining the ancestor and/or descendent classifications from the classification hierarchy (for example) as defined by the relationships stored in the classification database described above, in the present example these would be the parent classification B, the grandparent A, and the children J and K. The appropriate bits in the bit field would then be set in the bit field for each of the related classifications. In the present example, the appropriate bits are b₁, b₀, b₉ and b₁₀. Combining all of the bits together results in a combined bit field of 1100100001100.

For example, AND'ing the above bit field with the bit field for H would be performed as follows:

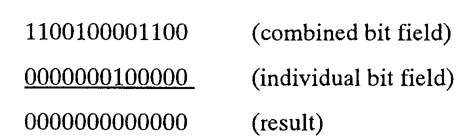

The zero result indicates that there is no match, if however the bit for the classification J was AND'ed with the bit field for H, the calculation would be as follows:

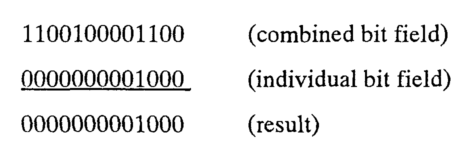

This is a non-zero result and therefore indicates a match.

It is also possible to construct bit fields for multiple classifications by OR-ing together the individual bit fields for two separate classifications. This may be used, for example, as a technique to construct a bit field for document having a plurality of classifications or building document bitfields which include related classifications (ancestors and/or descendants), by extracting the bit fields from the database for each classification and OR-ing them together. For example, if the classifications D and C were combined into a single bit field it would result in the following:

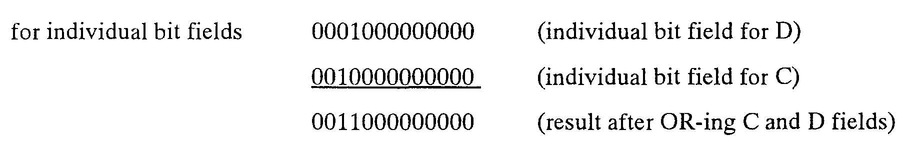

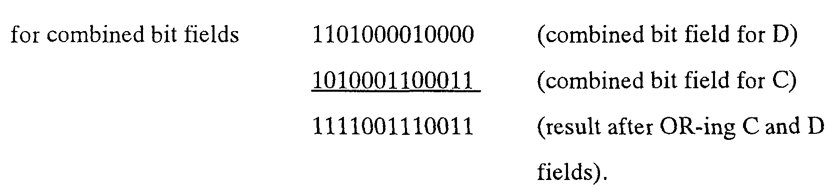

The advantage of this feature is that documents may be classed in multiple classifications in a single field without increasing the duration of a search. The documents may also be searched using multiple classifications in a single search field. Accordingly, when checking a document for a match with a search criteria only one comparison is required.

It will be appreciated by those skilled in the art that bit wise comparisons are significantly faster than other types of comparisons and that accordingly, the speed of operation of a search using the described technique will be radically improved from prior art methods, i.e. using conventional relational tables.

It will be appreciated that a combined bit field may be constructed for the classifications of the documents to be searched or for the classifications in the search criteria, as long as an individual bit field is used for the other. It is preferable that the combined bit fields are constructed for the documents, as this may be done once (e.g. when the document is published) rather than constructing a combined bit field each time a search is performed.

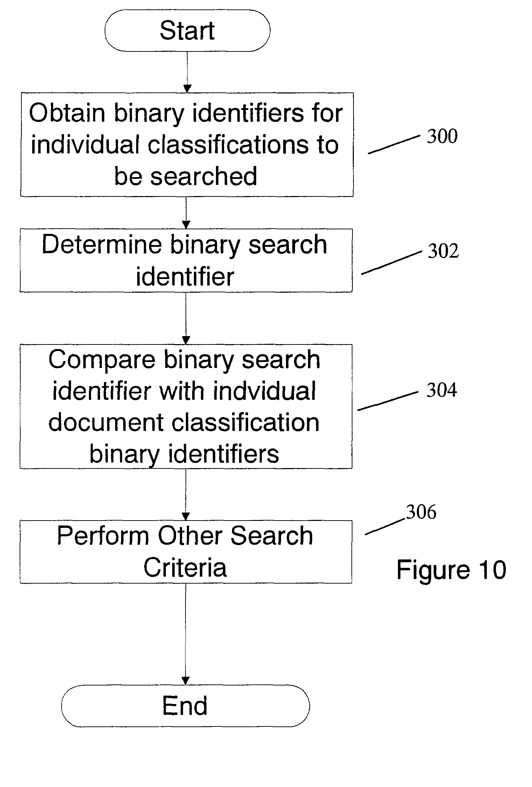

A method will now be described for carrying out the step of searching 130 the database for documents using a classification as shown in the method Figure 7. This method, shown in Figure 10, commences with the determination 302 of a binary search identifier from the classifications to be searched as requested by the searcher. The binary search identifier is obtained by OR-ing the binary identifiers for each classification submitted, the binary identifiers are extracted 300 from the database using the search classifications submitted by the searcher. It will be appreciated that this only applies where the classifications are requested in an OR search, e.g. find documents in Class A or Class B.

The individual classification information in the database for each document to be searched is then compared 304 with the search identifier to obtain any matching documents. A matching document is defined as one in which when the binary classification identifier for the document is OR-d with the binary search identifier a non-zero result is obtained. Any matching document found is added to a list of matching documents found.

The list of documents found matching the classifications may then be searched 306 using further items specified in the search criteria, e.g. a keyword. Alternatively, this step of using further items could be performed before checking for matching classifications. Any remaining documents on the list of documents found matching the classification criteria and thereafter (if applicable) other search criteria are returned in a suitable form to the searcher as described above.

It will be appreciated by those skilled in the art that the herein described classification system which enables the use of bit searching may be applied retrospectively to databases using a suitable batch process.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. A computer implemented method of storing documents classifications in a document classification datastore for use with a classification system having one or more categories, each category having a plurality of classifications which are linked in a hierarchical structure (140,142,144,146), comprising the steps of:
obtaining the classifications for a document for a first category;
determining a binary identifier for the document for each of the obtained classifications in the first category,
combining the determined binary identifiers to produce a combined binary identifier, and
storing the combined binary identifier in a first datastore in association with the document.

2. A computer implemented method of storing documents classifications according to claim 1, wherein the step of obtaining the document classifications for a document may be performed by extracting the classifications from a second datastore storing documents and their associated classifications, as input from a user and/or extracting the information directly from the document.

3. A computer implemented method of storing documents classifications according to claim 1 or claim 2, wherein the binary identifier for each classification is a binary number which is a power of two.

4. A computer implemented method of storing documents classifications according to any preceeding claim, wherein the step of determining a binary identifier for each classification for a document is preferably performed by retrieving a binary identifier value, from a database containing a list of classifications and corresponding binary numbers for each of the obtained classifications.

5. A computer implemented method of storing documents classifications according to claim 4, wherein each classification has a unique corresponding binary identifier.

6. A computer implemented method of storing documents classifications according to claim 5, wherein the corresponding binary numbers each have only a single bit set.

7. A computer implemented method of storing documents classifications according to any preceeding claim, wherein the step of combining the determined binary identifiers is preferably performed using an bitwise binary OR operation.

8. A computer implemented method of storing documents classifications according to anyone of claims 1 to 6, wherein the step of combining the determined binary identifiers may be performed by setting individual bits, as defined by the retrieved binary numbers.

9. A computer implemented method of storing documents classifications according to any preceeeding claim, wherein the first datastore is preferably a document classification table in a database having a first field for identifying documents and a second field for storing the combined binary identifiers.

10. A computer implemented method of storing documents classifications according to claim 9, wherein the classification system has more than one category of . classification, and a third field is provided in the document classification, the third field identifying the category type.

11. A computer implemented method of storing documents classifications according to any preceeeding claim, wherein the step of obtaining the classifications for a document for a first category includes the further step of determining ancestor and/or descendent classifications for each particular classification.

12. A computer readable storage medium having executable program code embodied therein, which when executed on a computer system performs the steps of the methods of anyone of claims 1 to 11.

13. A computer implemented method for searching documents having classification information stored as binary identifiers, with each classification in a category, being identified by a unique binary identifier, comprising the steps of:
accepting one or more classifications submitted by a user to be searched, determining a binary search identifier from the classifications submitted by a user,
comparing the classification information of documents to be searched with the search identifier, and
transmitting a list of documents having matching classification information to the search identifier in the database to the user.

14. A computer implemented method for searching documents having classification information stored as binary identifiers, according to claim 13, wherein the step of determining a binary search identifier from the classifications submitted by a user, comprises the steps of:
obtaining a binary identifier for each classification submitted from a database of classifications containing classifications and their associated binary identifiers, and
performing a bitwise OR operation on all of the obtained binary identifiers to produce the search identifier.

15. A computer implemented method for searching documents having classification information stored as binary identifiers according to claims 13 or 14, wherein the step of comparing the classification information of documents to be searched with the search identifier is performed using a bitwise OR operation.

16. A computer readable storage medium having executable program code embodied therein, which when executed on a computer system performs the steps of the methods of anyone of claims 13 to 15.

17. A computer implemented method of searching documents stored in a datastore which have been classified using a classification structure comprised of a plurality of levels, with each level having relations with adjacent levels, such that each classification in the classification in the classification may have ancestor classifications and/or descendent classifications, comprising the steps of:
obtaining a search criteria from a user including at least one classification to be searched,
searching for all documents in the datastore which have a classification matching either the classifications provided by the user in the search criteria, or a classification which is a descendent of the classification provided by the user.

18. A computer implemented method of searching documents stored in a datastore according to claim 17, wherein the step of searching for all documents in the datastore includes the step of searching for all documents having classifications which are ancestors of the classification provided by the user in the search criteria.

19. A computer implemented method of searching documents stored in a datastore according to claim 17 or claim 18, wherein the step of searching is performed by comparing document field values in the datastore, each document field value being associated with and identifying the classifications of individual documents, with a search field identifying the search request.

20. A computer implemented method of searching documents stored in a datastore according to anyone of claims 17 to 19, wherein the document fields and search fields are bit fields with each classification being represented by a unique bit in each field.

21. A computer implemented method of searching documents stored in a datastore according to claim 20, wherein the step of comparing the document fields and the search field is performed using a bit-wise AND operation.

22. A computer implemented method of searching documents stored in a datastore according to anyone of claim 17 to 21, wherein a single document field is used to identify the classifications of the document, the ancestor classifications and the descendent classifications of the document classifications, each of the classifications being identified by a bit in the bit field.

23. A computer implemented method of searching documents stored in a datastore according to claim 22 where only the classifications provided by the user in the search criteria are identified by bits in the bit search field.

24. A computer implemented method of searching documents stored in a datastore according to any one of claims 17 to 21, wherein the search field is used to identify the classifications provided by the user in the search criteria of the document, the ancestor classifications and the descendent classifications of the classifications provided by the user in the search criteria of the document, each of the classifications being identified by a bit in the search field.

25. A computer implemented method of searching documents stored in a datastore according to claim 24 wherein only the document classifications are identified by bits in the document bit field.

26. A computer readable storage medium having executable program code embodied therein, which when executed on a computer system performs the steps of the methods of anyone of claims 17 to 25.
